# EUROPEAN PATENT APPLICATION

(11) **EP 4 574 331 A1**
(43) Date of publication of application: **25.06.2025**
(21) Application number: 23307240.4
(22) Date of filing: 18.12.2023
(51) Int. Cl.: B23K 37/04, H01M 10/04, H01M 50/103, H01M 50/15, H01M 50/536

(54) **PROCESS FOR MANUFACTURING AN ELECTROCHEMICAL CELL WITH PIVOTING TOOLS**

(71) Applicant: Automotive Cells Company SE, 33520 Bruges (FR)
(72) Inventor: LAATIAOUI, Najib, 33000 Bordeaux (FR); ARDRINO, Thomas, 33320 Eysines (FR); BOOS, Gwenaelle, 33320 Eysines (FR); LAPORTE, Rémy, 33440 Ambares et Lagrave (FR)
(74) Representative: Alatis

(57) **Abstract**

The invention relates to a process for manufacturing an electrochemical cell comprising in particular:
- a step for providing two electrode assemblies (2, 3) comprising each stacks of positive electrodes connected to each other and stacks of negative electrodes connected to each other,
- a first step of welding two first connection elements (4, 5) of the electrode assemblies to a first collector (15) of a cover (12),
- a step of inserting the electrode assemblies into two respective supporting tools (36, 37) of an assembly tool,
- a step of pivoting the supporting tools towards the cover so as to press the electrode assemblies in abutment against each other,
- a step of bending the two second connection elements by two second pivoting flaps (55) of the supporting tools, and
- a second step of welding the second end portions of the second connection elements to the second collector.

## Description

### TECHNICAL FIELD OF THE INVENTION

The invention relates to the technical field of energy storage devices, and in particular to a process for manufacturing an electrochemical cell.

Electrochemical cells are used in electric or hybrid vehicles, i.e. powered at least partly by electrical energy, for example.

### BACKGROUND ART

Motor vehicles with electric or hybrid traction or propulsion comprise one or more battery modules connected to a power network to supply an electric motor (traction or propulsion).

The battery modules are grouped together in a housing to form a battery pack, which generally contains a mounting interface and connection terminals.

Each battery module comprises at least one electrochemical cell generating current by chemical reaction, for example of the lithium-ion (or Li-ion), Ni-Mh, Ni-Cd or lead type.

The electrochemical cell comprises two electrode assemblies, each comprising stacks of positive electrodes connected to each other by a positive electrode tab generally made of aluminum, and stacks of negative electrodes connected to each other by a negative electrode tab generally made of copper.

The two positive electrode tabs are welded to a positive current collector by ultrasonic welding. The two negative electrode tabs are ultrasonically welded to a negative current collector. The two electrode assemblies are thus joined by the two collectors.

Document US2021384513A1 describes an example of two current collectors, each associated with a terminal (positive or negative) and positioned on a top part of the electrode assemblies, between the electrode assemblies and a cover comprising the positive and negative terminals.

Each current collector is in the form of an L-shaped piece of sheet metal comprising a first wing for welding the current collector to the electrode tab by ultrasonic welding and a second wing for welding the current collector to a foot terminal by laser welding. A fold is made to connect the first wing to the second wing.

Each foot terminal is connected to one of the positive or negative terminals provided on the cover that closes a metal housing in which the two electrode assemblies are housed.

The prior art electrochemical cell manufacturing process for cells comprising tabs at the top comprises a preliminary ultrasonic welding step to weld the positive electrode stacks of each electrode assembly to a positive electrode tab, an ultrasonic welding step to weld the two positive electrode tabs of two electrode assemblies to the positive current collector, and a laser welding step to weld the positive current collector to a foot terminal. The positive electrode tab and the positive current collector are made of aluminum.

The same steps are applied on the negative terminal side having negative electrode tabs and negative current collector made of copper.

However, some electrochemical cells comprise two electrode assemblies with connecting elements positioned on their side faces and it is difficult to laser-weld the negative electrode tabs to the negative current collector, which are both made of copper, just as it is equally difficult to ultrasonically weld the positive electrode tabs to the positive current collector, which are made of aluminum.

These two different welding methods are, however, essential, but they are carried out in several stages leading to a complex process.

### DESCRIPTION OF THE INVENTION

The invention aims to solve some or all of the disadvantages of the prior art, in particular by proposing a simple process for manufacturing an electrochemical cell and an assembly tool for assembling two electrode assemblies of the electrochemical cell enabling to simplify the process.

To this end, according to a first aspect of the invention, a process for manufacturing an electrochemical cell is proposed, comprising:
- a step of providing two electrode assemblies each comprising stacks of positive electrodes connected to each other and stacks of negative electrodes connected to each other, each electrode assembly comprising a first connection element projecting from a first side face of the electrode assembly and electrically connected to the stacks of negative electrodes and a second connection element projecting from a second side face of the electrode assembly and electrically connected to the stacks of positive electrodes,
- a step of providing a cover comprising a negative terminal connected to a first collector and a positive terminal connected to a second collector, each collector projecting from an inner face of the cover and being positioned on an end portion of the cover,
- a first step of welding the first connection elements to the first collector,
- a step of inserting the electrode assemblies into two respective supporting tools of an assembly tool,
- a step of pivoting the supporting tools towards the cover so as to press the electrode assemblies in abutment against each other, causing the first connection elements to bend,
- a step of bending the two second connection elements by two second pivoting flaps each rotatably mounted on a second side end of one of the supporting tools, a second end portion which is bent of the second connection elements being in abutment against the second collector, and
- a second step of welding the second end portions of the second connection elements to the second collector.

The invention thus provides a method for manufacturing an electrochemical cell that is simpler than those of prior art. The assembly tool improves reliability by easing the access for welding .

The use of two electrode assemblies with connecting elements positioned on their side faces simplifies the manufacturing process and reduces its duration.

Alternatively, the second connection elements and the second collector are made of aluminum. The second welding step is performed by laser welding.

Ultrasonic welding of the negative electrode tabs to the negative copper current collector is carried out before laser welding of the positive electrode tabs to the positive aluminum current collector to simplify the manufacturing process. The ultrasound welding process requires to have access to the top and the bottom of each parts (copper tabs and collector) so to have them unfolded. If the aluminium parts would be laser-weld before, no more access would be given to the negative parts anymore.

The manufacturing process is thus simplified and faster due to the tools.

Alternatively, each second connection element comprises a second foot terminal extending from the second side face of the electrode assembly and a second tab extending from the second foot terminal. A second bending section is located between the second foot terminal and the second tab. The second end portions is welded to the respective second collector over a second width l2 of at least 3 mm and preferably at least 6 mm during the second welding step.

This width ensures a strong weld and optimum electrical contact between the second connection element and the second collector.

Alternatively, the second width l2 is greater than or equal to a quarter of the width L2 of the second tab and less than or equal to half the width L2 of the second tab.

This proportion ensures a strong weld and also enables the second tab to be bent correctly. It also leads to a smaller tab and save space in the cell. The energy density is then increased.

Alternatively, during the first step of welding the first connection elements to the first collector, the two electrode assemblies are aligned parallel and positioned perpendicular to the cover.

This position facilitates the ultrasonic welding operation of the first connection elements to the first collector, and reduces the time required for this operation.

Alternatively, when welding the second connecting elements, each second tab pivots about a second axis of rotation perpendicular to the cover and passing through the second linking section.

This pivoting at the linking sections facilitates the folding.

Alternatively, during the second welding step, laser welding is performed through the second pivoting flaps and preferably through an oblong hole formed in the second pivoting flaps.

This enables to weld quicky the second connecting elements to the second collector.

The invention also relates to a tool for assembling two electrode assemblies of an electrochemical cell comprising two supporting tools. Each supporting tool comprises a housing configured to receive one of the electrode assemblies. Each supporting tool is mounted so as to be rotatable relative to the cover and about a third rotation axis passing through a first side end of the supporting tools.

The supporting tools enables to maintain the electrode assemblies and to rotate them.

Alternatively, each first side end of the supporting tools comprises a first opening intended to be positioned opposite a first connection element of one of the electrode assemblies.

Alternatively, each supporting tool comprises a second side end having a second opening intended to be positioned opposite to a second connection element of one of the electrode assemblies.

Alternatively, the supporting tools comprises each a second pivoting flap. The second pivoting flaps are positioned in the second openings respectively and are pivotable relative to the supporting tools about a fourth rotation axis passing through each second opening.

The second pivoting flap enables to bent quickly the two second connection elements.

Alternatively, each pivoting flap comprises an end having an oblong hole aligned parallel to the fourth rotation axis.

This enables to weld quicky the second connecting elements to the second collector.

### BRIEF DESCRIPTION OF THE FIGURES

Further features and advantages of the invention will become apparent from the following description, with reference to the appended figures, which illustrate:
- figure 1: a schematic view of two electrode assemblies of an electrochemical cell after inserted in two respective supporting tools of an assembly tool, according to one embodiment of the invention;
- figure 2: a detailed schematic view of the first two connection elements welded to the first collector;
- figure 3: a schematic view of the two electrode assemblies and the two respective supporting tools during a pivoting step;
- figure 4: a schematic view of the two electrode assemblies pressed together after the pivoting step;
- figure 5: a schematic view of two second connection elements before their bending;
- figure 6: a schematic view of the two second connection elements during a step of bending the second connection elements and a step of welding the second connection elements to a second collector;
- figure 7: a schematic view of the two second connection elements after the steps of figure 6.

For greater clarity, identical or similar elements are marked by identical reference signs throughout the figures.

### DETAILED DESCRIPTION OF PREFERRED EMBODIMENTS

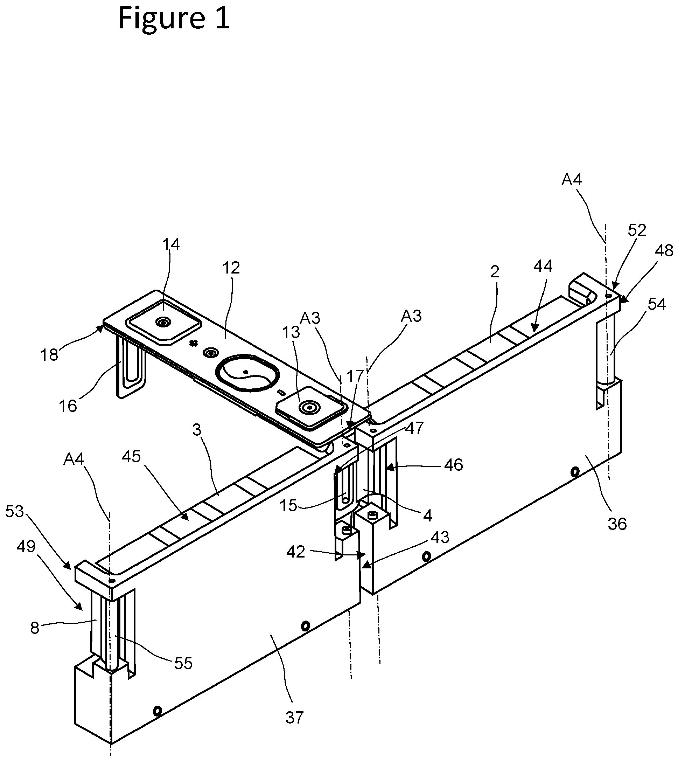

The invention relates to an electrochemical cell comprising two electrode assemblies **2, 3,** as illustrated in figure **1****.**

Each electrode assembly **2, 3** comprises stacks of negative electrodes connected to each other by a first connecting element **4, 5** made of copper and stacks of positive electrodes connected to each other by a second connecting element **6, 7** made of aluminium.

The electrochemical cell can be used, for example, in an electric or hybrid vehicle, i.e. powered at least partially by electrical energy.

The electrode stacks are separated by a separator and are known as a "stack". The interconnected positive electrodes are connected to a positive terminal, and the interconnected negative electrodes are connected to a negative terminal.

It is known to assemble, in series and/or in parallel, a plurality of electrochemical cells in order to create battery modules.

Several modules are grouped together in a housing to form a battery pack, which generally contains a mounting interface and connection terminals.

The positive and negative electrodes are housed in a hollow metal casing, generally made of aluminum. Once the electrode assembly has been integrated into the housing, an upper wall, in the form of a plate forming a cover **12,** is welded to the housing by laser, for example, to provide the structural connection and sealing of the electrochemical cell.

The housing has a parallelepiped shape with a rectangular cross-section and comprises two opposing longitudinal walls and two opposing transverse walls perpendicular to the longitudinal walls. A positive terminal **14** and a negative terminal **13** are arranged on the cover **12.**

The invention relates to a process for manufacturing an electrochemical cell comprising a step of providing two electrode assemblies **2, 3** including a first electrode assembly **2** and a second electrode assembly **3.** Each electrode assembly **2, 3** comprises stacks of positive electrodes connected to each other, and stacks of negative electrodes connected to each other.

Each electrode assembly **2, 3** comprises a first connection element **4, 5** projecting from a first side face **8, 9** of the electrode assembly **2, 3.** Each first connection element **4, 5** is an extension of a part of the negative electrodes located inside the negative electrode stacks of the electrode assemblies **2, 3.** The parts of the negative electrodes are welded together to form the first connection element **4, 5.**

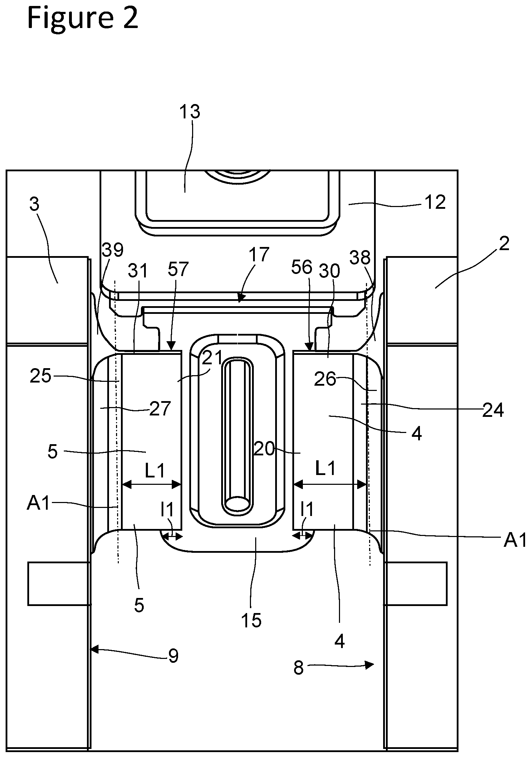

As illustrated in figure 2, each first connection element **4, 5** comprises a first foot terminal **26, 27** extending from the first side face **8, 9** of the electrode assemblies **2, 3.** Each first foot terminal **26, 27** is formed by an extension of the negative electrodes located inside the negative electrode stacks of the electrode assemblies **2, 3.** Each first connection element **4, 5** comprises also a first tab **30, 31** extending from the first foot terminal **26, 27** and a first bending section **24, 25** located between the foot terminal **26, 27** and the first tab **30, 31.**

Each first tab **30, 31** projects from the first foot terminal **26, 27,** perpendicular to the first side face **8, 9** of the electrode assembly **2, 3.**

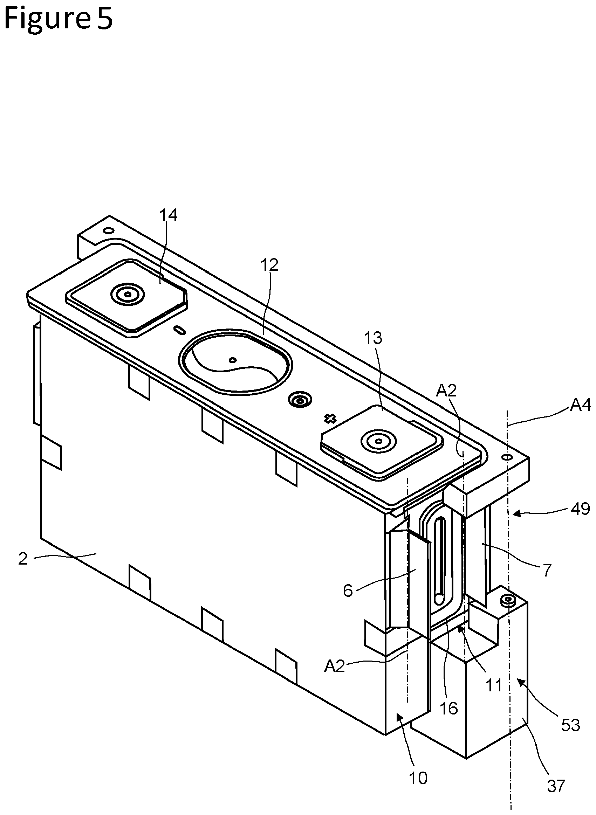

As illustrated in figure 5, each electrode assembly **2, 3** also comprises a second connecting element **6, 7** projecting from a second side face **10, 11** of the electrode assembly **2, 3.** Each second connection element **2, 3** is an extension of a part of the positive electrodes located inside the positive electrode stacks of the electrode assemblies **2, 3.** The parts of the positive electrodes are welded together to form the second connection element **2, 3.**

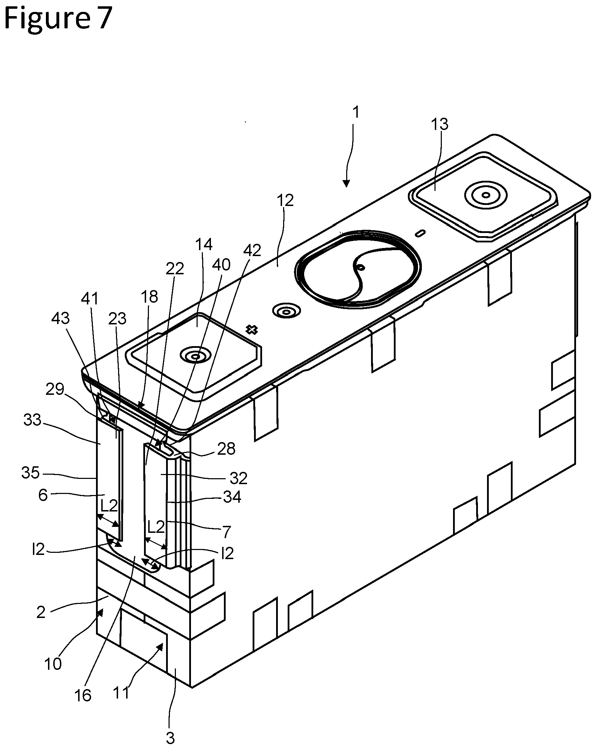

As illustrated in figure 7, each electrode assembly **2, 3** also comprises a second connecting element **6, 7** projecting from a second side face **10, 11** of the electrode assembly **2, 3.** Each second connection element **2, 3** is an extension of a part of the positive electrodes located inside the positive electrode stacks of the electrode assemblies **2, 3.** The parts of the positive electrodes are welded together to form the second connection element **2, 3.**

As illustrated in figure 5, before the second step of welding, each second tab **32, 33** projects from the second foot terminal **28, 29** and perpendicularly from the second side face **10, 11** of the electrode assembly **2, 3.**

The manufacturing process also includes a step of providing a cover **12** comprising a negative terminal **13** electrically connected to a first collector **15** and a positive terminal **14** electrically connected to a second collector **16.**

Each collector **15, 16** is in the form of a tab and projects from an inner face **19** of the cover **12.** Each collector **15, 16** is positioned on an end portion **17, 18** of the cover **12.**

The first connection elements **4, 5** and the first collector **15** are made of copper. The second connecting elements **6, 7** and the second collector **16** are made of aluminum.

The manufacturing process then comprises a first step of welding the two first connection elements **4, 5** to the first collector **15** by ultrasonic welding.

As illustrated in figures 1 and 2, the two electrode assemblies **2, 3** are aligned parallel and positioned perpendicular to the cover **12.** In other words, the two electrode assemblies **2, 3** are laid flat.

The two electrode assemblies **2, 3** extend in a plane **X, Y** which is perpendicular to a direction **Z** along which the cover **12** principally extends.

The first tabs **30, 31** and the first collector **15** have a rectangular shape.

As illustrated in figure 2, each first tab **30, 31** comprises a first end portion **20, 21** welded to the first collector **15** over a first width **l1** of at least 3 mm and preferably at least 6 mm.

The first width **l1** is greater than or equal to a quarter of the width **L1** of the first tab **30, 31** and less than or equal to half the width **L1** of the first tab **30, 31.**

The manufacturing process then comprises a step of inserting the electrode assemblies **2, 3** into two respective supporting tools **36, 37** of an assembly tool. A first electrode assembly **2** is inserted into a first supporting tool **36** and a second electrode assembly **3** is inserted into a second supporting tool **37** as illustrated in figure 1.

The manufacturing process then comprises a step of pivoting the supporting tools **36, 37** towards the cover **12** so as to press the electrode assemblies **2, 3** against each other, causing the first connection elements **4, 5** to bend.

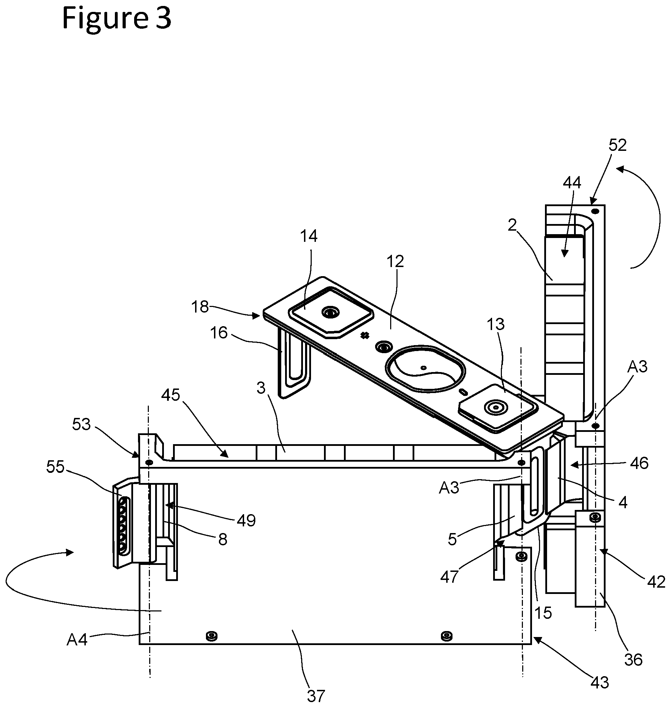

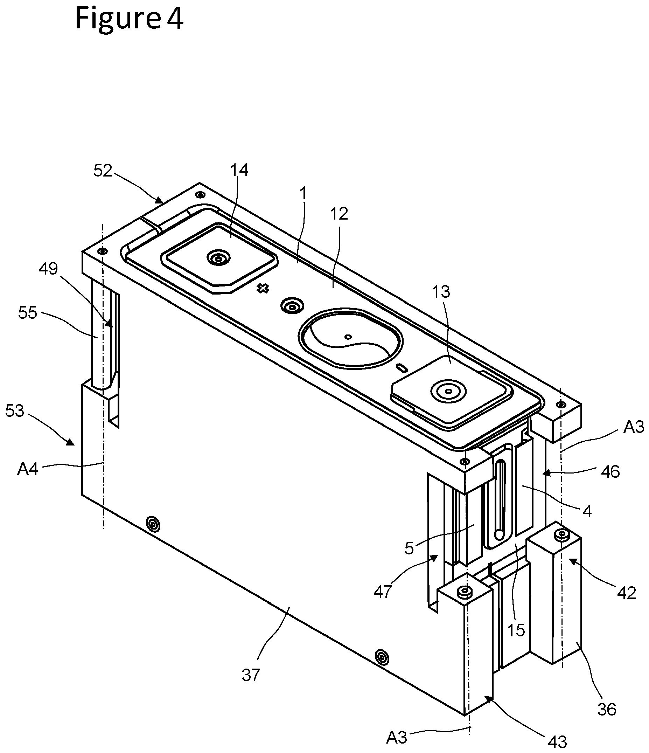

Figure 3 shows the electrode assemblies **2, 3** being pivoted. The electrode assemblies **2, 3** are pivoted until they are pressed together to form a parallelepiped electrode assembly **1,** as shown in figure 4.

Each supporting tools **36, 37** rotates relative to the cover **12** and about a third rotation axis **A3** passing through a first side end **42, 43** of the supporting tools **36, 37.**

Each first side end **42, 43** of the supporting tools **36, 37** comprises a first opening **46, 47** intended to be positioned opposite a first connection element **4, 5** of one of the electrode assemblies **2, 3.** The first opening **46, 47** have a rectangular shape.

This rotation causes the first connecting elements **4, 5** to bend.

Each first tab **30, 31** pivots about a first axis of rotation **A1** perpendicular to the cover **12** and passing through the first linking section **24, 25** of the first connecting elements **4, 5.**

Each first tab **30, 31** and each supporting tool **36, 37** pivot through approximately 90° from its initial position.

The first linking section **24, 25** deforms in order to bend.

The supporting tools **36, 37** can be rotated simultaneously or in a staggered manner.

The first collector **15** comprises two first lateral areas **56, 57** which are each positioned between one of the first end portions **20, 21** of the first tabs **30, 31** and a first internal part **38, 39** of the first foot terminal **26, 27** after the pivoting step.

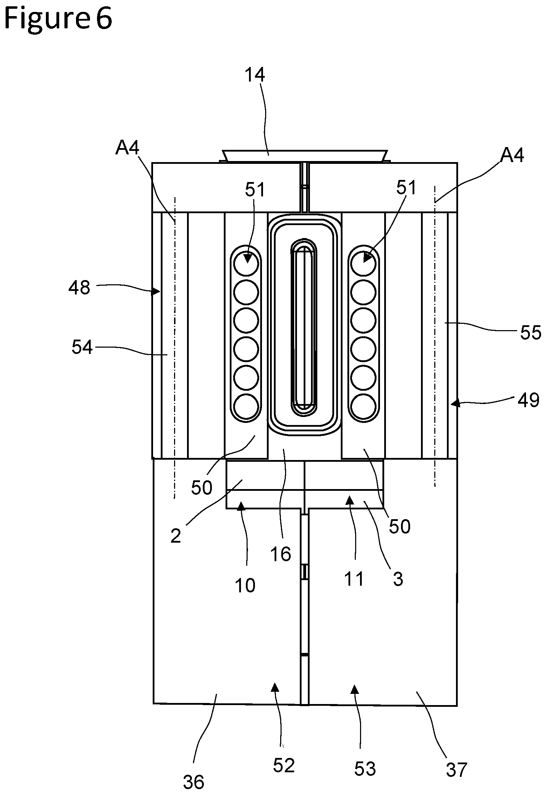

The supporting tools **36, 37** comprises two second pivoting flaps **54, 55,** each rotatably mounted on a second side end **52, 53** of one of the supporting tools **36, 37,** as illustrated in figure 6.

The second pivoting flaps **54, 55** have a rectangular shape.

The second side end **52, 53** have a second opening **48, 49** intended to be positioned opposite to a second connection element **6, 7** of one of the electrode assemblies **2, 3.**

The second pivoting flaps **54, 55** are positioned in the second openings **48, 49** respectively and are pivotable relative to the supporting tools **36, 37** about a fourth rotation axis A**4** passing through each second opening **48, 49.**

The manufacturing process then comprises a step of bending the two second connection elements **6, 7** by the two second pivoting flaps **54, 55** until a second end portion **22, 23** which is bent of the second connection elements **6, 7** comes in abutment against the second collector **16.**

Each second tab **32, 33** pivots about a second axis of rotation **A2** perpendicular to the cover **12** and passing through the second linking section **34, 35** and the second end portions **22, 23** deform in order to bend.

The second collector **16** comprises two second lateral areas **40, 41** which are each positioned between one of the second end portions **22, 23** of the second tabs **32, 33** and a second inner part **42, 43** of the second foot terminal **28, 29.**

The manufacturing process then comprises a second step of welding the second end portions **22, 23** of the second tabs **32, 33** to the second collector **16** by laser welding.

The second tabs **32, 33** and the second collector **16** have a rectangular shape.

Each second pivoting flap **54, 55** comprises an end **50** having an oblong hole **51** aligned parallel to the fourth rotation axis A**4**. The oblong holes **51** extend along quite the whole second pivoting flap **54, 55** heigh. Alternatively, each second pivoting flap **54, 55** can comprise holes with a different shape, as circular shape, for instance.

During the second welding step, laser welding is performed through the second pivoting flaps **54, 55** and preferably through the oblong holes **51** formed in the second pivoting flaps **54, 55.**

The second end portions **22, 23** are welded to the respective second collectors **16** over a second width l**2** of at least **3** mm and preferably at least **6** mm, as illustrated in figure 7.

The second width l**2** is greater than or equal to a quarter of the width L**2** of the second tab **32, 33** and less than or equal to half the width L**2** of the second tab **32, 33.**

In summary, the first connecting elements **4, 5** are welded to the first collector **15** before being bent, while the second connecting elements **6, 7** are bent before being welded to the second collector **16.**

Naturally, the invention is described in the foregoing by way of example. It is understood that the person skilled in the art will be able to realize different variants of the invention without departing from the scope of the invention.

It is emphasized that all features, as they become apparent to a person skilled in the art from the present description, the drawings and the attached claims, even if in concrete terms they have only been described in connection with other specific features, both individually and in any combinations, may be combined with other features or groups of features disclosed herein, provided that this has not been expressly ruled out or that technical circumstances render such combinations impossible or meaningless.

## Claims

1. Process for manufacturing an electrochemical cell, **characterized in that** it comprises:
- a step of providing two electrode assemblies (2, 3) each comprising stacks of positive electrodes connected to each other and stacks of negative electrodes connected to each other, each electrode assembly (2, 3) comprising a first connection element (4, 5) projecting from a first side face (8, 9) of the electrode assembly (2, 3) being electrically connected to the negative electrode stacks, and a second connection element (6, 7) projecting from a second side face (10, 11) of the electrode assembly (2, 3) and being electrically connected to the positive electrode stacks,
- a step of providing a cover (12) comprising a negative terminal (13) connected to a first collector (15) and a positive terminal (14) connected to a second collector (16), each collector (15, 16) projecting from an inner face (19) of the cover (12) and being positioned on an end portion (17, 18) of the cover (12),
- a first step of welding the first connection elements (4, 5) to the first collector (15),
- a step of inserting the electrode assemblies (2, 3) into two respective supporting tools (36, 37) of an assembly tool,
- a step of pivoting the supporting tools (36, 37) towards the cover (12) so as to press the electrode assemblies (2, 3) in abutment against each other, causing the first connection elements (4, 5) to bend,
- a step of bending the two second connection elements (6, 7) by two second pivoting flaps (54, 55) each rotatably mounted on a second side end (52, 53) of one of the supporting tools (36, 37), a second end portion (22, 23) which is bent of the second connection elements (6, 7) being in abutment against the second collector (16), and
- a second step of welding the second end portions (22, 23) of the second connection elements (6, 7) to the second collector (16).

2. Manufacturing process according to claim 1, **characterized in that** the second connection elements (6, 7) and the second collector (16) are made of aluminum, the second welding step being performed by laser welding.

3. Manufacturing process according to claims 1 or 2, **characterized in that** each second connection element (6, 7) comprises a second foot terminal (28, 29) extending from the second side face (10, 11) of the electrode assembly (2, 3) and a second tab (32, 33) extending from the second foot terminal (28, 29), a second bending section (34, 35) being located between the second foot terminal (28, 29) and the second tab (32, 33), the second end portions (22, 23) being welded to the respective second collector (16) over a second width l2 of at least 3 mm and preferably at least 6 mm during the second welding step.

4. Manufacturing process according to claim 3, **characterized in that** the second width l2 is greater than or equal to a quarter of the width L2 of the second tab (32, 33) and less than or equal to half the width L2 of the second tab (32, 33).

5. Manufacturing process according to any one of claims 1 to 4, **characterized in that** during the first step of welding the first connection elements (4, 5) to the first collector (15), the two electrode assemblies (2, 3) are aligned parallel and positioned perpendicular to the cover (12).

6. Manufacturing process according to any one of claims 3 to 5, **characterized in that** during the bending step of the second connecting elements (6, 7), each second tab (32, 33) pivots about a second axis of rotation (A2) perpendicular to the cover (12) and passing through the second linking section (34, 35).

7. Manufacturing process according to any of claims 1 to 6, **characterized in that** during the second welding step, laser welding is performed through the second pivoting flaps (54, 55) and preferably through an oblong hole (51) formed in the second pivoting flaps (54, 55).

8. Tool for assembling two electrode assemblies (2, 3) of an electrochemical cell, comprising two supporting tools (36, 37) each comprising a housing (44, 45) configured to receive one of the electrode assemblies (2, 3), each supporting tool (36, 37) being mounted so as to be rotatable relative to the cover (12) and about a third rotation axis (A3) passing through a first side end (42, 43) of the supporting tools (36, 37).

9. Assembly tool according to claim 8, **characterized in that** each first side end (42, 43) of the supporting tools (36, 37) comprises a first opening (46, 47) intended to be positioned opposite a first connection element (4, 5) of one of the electrode assemblies (2, 3).

10. Assembly tool according to any one of claims 8 or 9, **characterized in that** each supporting tool (36, 37) comprises a second side end (52, 53) having a second opening (48, 49) intended to be positioned opposite to a second connection element (6, 7) of one of the electrode assemblies (2, 3).

11. Assembly tool according to claim 10, **characterized in that** the supporting tools (36, 37) comprises each a second pivoting flap (54, 55), the second pivoting flaps (54, 55) being positioned in the second openings (48, 49) respectively and being pivotable relative to the supporting tools (36, 37) about a fourth rotation axis (A4) passing through each second opening (48, 49).

12. Assembly tool according to claim 11, **characterized in that** each second pivoting flap (54, 55) comprises an end (50) having an oblong hole (51) aligned parallel to the fourth rotation axis (A4).
